(19) Europäisches Patentamt
European Patent Office
Office européen des brevets

(11) **EP 0 995 569 B2**

(12) **NEUE EUROPÄISCHE PATENTSCHRIFT**

(45) Veröffentlichungstag und Bekanntmachung des Hinweises auf die Entscheidung über den Einspruch:
**23.01.2008 Patentblatt 2008/04**

(45) Hinweis auf die Patenterteilung:
**17.07.2002 Patentblatt 2002/29**

(21) Anmeldenummer: **99120224.3**

(22) Anmeldetag: **09.10.1999**

(51) Int Cl.:
*B29C 44/42* (2006.01)    *B29C 44/34* (2006.01)
*B29C 45/17* (2006.01)

(54) **Verfahren und Vorrichtungen zum Spritzgiessen von Kunststoff-Formteilen aus thermoplastischem Kunststoff**

Methods and devices for injection moulding of plastic articles made of thermoplastic material

Procédés et appareils pour l'injection de pièces moulée en matière thermoplastique

(84) Benannte Vertragsstaaten:
**AT BE CH CY DE DK ES FI FR GB GR IE IT LI LU MC NL PT SE**

(30) Priorität: **20.10.1998 DE 19848151**

(43) Veröffentlichungstag der Anmeldung:
**26.04.2000 Patentblatt 2000/17**

(73) Patentinhaber: **Battenfeld GmbH**
**D-58540 Meinerzhagen (DE)**

(72) Erfinder:
• **Ehritt, Jürgen**
**57271 Hilchenbach (DE)**

• **Eckardt, Helmut**
**58540 Meinerzhagen (DE)**

(56) Entgegenhaltungen:
| | |
|---|---|
| **EP-A- 0 799 853** | **EP-A- 0 843 246** |
| **DE-A- 1 964 748** | **DE-A- 2 335 310** |
| **DE-A- 3 613 334** | **US-A- 4 133 858** |
| **US-A- 4 211 523** | **US-A- 4 783 292** |

• **PATENT ABSTRACTS OF JAPAN vol. 1995, no. 03, 28. April 1995 (1995-04-28) & JP 06 339974 A (MITSUBISHI CABLE IND LTD), 13. Dezember 1994 (1994-12-13)**

EP 0 995 569 B2

## Beschreibung

Die Erfindung betrifft Verfahren zum Spritzgießen von Kunststoff-Formteilen aus thermoplastischem Kunststoff, die die Schritte aufweisen:

a) Herstellen von thermoplastischer Kunststoffschmelze durch Rotation einer Plastifizier- und Einspritzschnecke in einem Schneckenzylinder;

b) Versetzen der thermoplastischen Kunststoffschmelze mit einem Fluid durch Eingabe des Fluids in den Schneckenzylinder;

c) Durchmischen der mit Fluid versetzten thermoplastischen Kunststoffschmelze durch Ausführung einer Rotationsbewegung der Plastifizier- und Einspritzschnecke;

d) Einspritzen des Gemisches aus thermoplastischer Kunststoffschmelze und Fluid in die Kavität eines Spritzgießwerkzeugs.

Für die Herstellung von Kunststoff-Formteilen aus thermoplastischer Schmelze ist das Gasinnendruckverfahren bekannt. Es wird beispielsweise in der DE 37 34 164 A1 beschrieben. Bei diesem Verfahren wird zunächst Schmelze in die Kavität eines Spritzgießwerkzeugs eingespritzt und anschließend Stickstoffgas. Das Gas bildet im Inneren der Schmelze einen Hohlraum; der Gasdruck drückt die Schmelze während der Abkühlung gegen die Kavitätswände, so daß abkühlungsbedingte Volumenkontraktionen ausgeglichen werden können und die Formteiloberfläche frei von Einfallstellen ist.

Ein anderes vorbekanntes Verfahren stellt auf den Einsatz von Treibmitteln zur Herstellung von sog. Strukturschaumstoffen (TSG) ab. Bei diesen nimmt die Dichte von außen nach innen hin ab. Bei diesem Verfahren wird ein Treibmittel der thermoplastischen Kunststoffschmelze im Bereich der Plastifiziereinheit beigemischt, s. DE 19 64 748 sowie EP 0 799 853 A1. Abhängig von der sog. Anspringtemperatur des eingesetzten Treibmittels bestimmt sich die Spritztemperatur, da das Aufschäumen des Treibmittels erst in der Werkzeugkavität erwünscht ist.

Ein weiteres Spritzgießverfahren unter Einsatz eines Gases ist aus der DE 30 20 122 C2 bekannt. Dort wird Gas direkt in den Schneckenzylinder injiziert und in diesem mit der Kunststoffschmelze vermischt. Die Mischung von Kunststoffschmelze und Gas wird dann in die Werkzeugkavität eingespritzt. Dabei ist es erforderlich, die Menge des Gases zu dosieren und den Zeitpunkt des Einbringens von Gas genau zu steuern, um den Punkt des geringsten Materialdruckes in der Schnecke abzupassen. Die genannte Schrift offenbart hierzu eine Schaltungsanordnung, die zwei zusammengeschaltete Zeitrelais aufweist.

Nachteilhaft bei der aus dieser Schrift genannten Lösung ist, daß axial feststehende Schnecken zum Einsatz kommen, die in aller Regel als Sonderanfertigungen hergestellt werden müssen.

Weiterhin ist zu bemängeln, daß für die präzise Herstellung insbesondere von großen, aufgeschäumten Formteilen wie Platten, das aus der DE 30 20 122 C2 vorbeschriebene Verfahren nicht produktionssicher genug arbeitet.

Aus der US-A-4 211 523 ist ein weiteres ähnliches Spritgießverfahren mit axial feststehender Schnecke bekannt, bei dem die Eingabe von Gas in die Schmelze bei konstanten Gasfluß erfolgt.

Der Erfindung liegt daher die **Aufgabe** zugrunde, dieses vorbekannte Spritzgießverfahren so weiterzuentwickeln, daß die Produktionssicherheit erhöht wird und es reproduzierbar möglich ist, auch große Formteile exakt in einer gewünschten Mischung von Kunststoff und Gas herzustellen. Weiterhin sollen es das Verfahren ermöglichen, an konventionellen Spritzgießmaschinen ohne nennenswerten Umbauaufwand eingesetzt werden zu können.

Diese Aufgabe wird erfindungsgemäß durch Verfahren gemäß ein Anspruch 1 gelöst. Fortbildungen sind in den Unteransprüchen vorgesehen.

Mit dieser Vorgehensweise wird erreicht, daß eine Beeinflussung der Einmischung von Fluid, insbesondere Gas, in die Kunststoffschmelze erreicht wird, dergestalt, daß eine gewünschte Konsistenz des Schmelze-Gas-Gemisches genau eingehalten werden kann. Dies ergibt sich daraus, daß sich überraschend herausgestellt hat, daß sich die Einhaltung einer genauen Druckdifferenz, z. B. 20 bar, zwischen dem höheren Fluiddruck und dem niedrigeren Schmelzedruck stabilisierend auf die Bildung der gewünschten Schmelze-Gas-Mischung auswirkt.

Gemäß einer ersten Weiterbildung ist vorgesehen, daß der Druck ($p_s$) in der thermoplastischen Kunststoffschmelze (1) zumindest während der Eingabe von Fluid (4) auf einem niedrigen Niveau gehalten wird. Das begünstigt die Bildung einer gewünschten Konsistenz der Schmelze-Gas-Mischung. Bezugsgröße für die Druckabsenkung ist der übliche Druck, der im Schneckenbereich beim Spritzgießen vorliegt. Vorzugsweise wird er erfindungsgemäß um 50 % abgesenkt. Hierzu werden die üblichen, dem Fachmann bekannten Spritzgießparameter (z. B. Drehgeschwindigkeit der Schnecke beim Plastifizieren) entsprechend beeinflußt.

Es kann gemäß einer Weiterbildung auch vorgesehen werden, daß auch während des Einspritzens des Gemisches aus thermoplastischer Kunststoffschmelze (1) und Fluid (4) in die Kavität (8) des Spritzgießwerkzeugs (5) weiter Fluid (4) zugeführt wird.

Besonders vorteilhaft läßt sich das erfindungsgemäße Verfahren betreiben, wenn als Plastifizier- und Einspritzschnecke (2) eine Mehrzonenschnecke eingesetzt wird, in deren Bereich der Schneckengänge (7) das Fluid (4) eingegeben wird. Besonders geeignete Mehrzonenschnecken sind Sechszonenschnecken, die eine Einzugszone, eine Kompressionszone, eine Meteringzone, eine Dekompressionszone, eine weitere Kompressionszone und eine Ausstoßzone aufweisen.

Die vorgenannte Druckabsenkung im Bereich der Schneckengänge kann bevorzugt auch dadurch erfolgen, daß eine Mehrzonenschnecke eingesetzt wird, wobei die Dekompressionszone der Mehrzonenschnecke in dem Bereich zu liegen kommt, wo sich die Eingabestelle für Gas befindet.

Das Verfahren wird in Verbindung mit einem Spritzgießwerkzeug (5) mit einem verschiebbaren Element zur Veränderung des Volumens der Kavität (8) des Werkzeugs (5) eingesetzt, also mit einem atmenden Werkzeug. Weiterhin ist vorgesehen, daß das Spritzgießwerkzeug (5) geeignet ist, einen Prägevorgang auszuführen, d. h. es kommt ein Prägewerkzeug zum Einsatz. Atmender Kern und Prägewerkzeug werden kombiniert eingesetzt. Das Einspritzen wird bei einem Kavitäts-Anfangsvolumen des Spritzgießwerkzeugs - der Spalt zwischen den Kavitäten ist vorzugsweise 0 mm - begonnen, wobei das Kavitätsvolumen während des Einspritzens erhöht wird und gegen Ende des Einspritzens durch Ausführung eines Prägevorganges wieder verringert wird.

Um die Aufschäumung des Schmelze-Gas-Gemisches im Werkzeug zu beeinflussen, ist weiterhin vorgesehen, daß zumindest zeitweise während des Einspritzens des Gemisches aus thermoplastischer Kunststoffschmelze (1) und Fluid (4) in die Kavität (8) des Spritzgießwerkzeugs (5) in der Kavität (8) ein Gegendruck aufgebaut und aufrechterhalten wird. Dieser Gegendruck kann nach einem vorgebbaren zeitlichen Profil gesteuert oder geregelt werden.

In der Zeichnung ist ein Ausführungsbeispiel der erfindungsgemäßen Vorrichtung dargestellt.

Fig. 1 zeigt schematisch eine Spritzgießmaschine in dem Verfahrensstadium, in dem eine Schmelze-Gas-Mischung hergestellt wird, in

Fig. 2 ist dieselbe Anordnung zu sehen, jetzt jedoch zu einem späteren Verfahrensstadium während der Einspritzung des Gemisches ins Werkzeug.

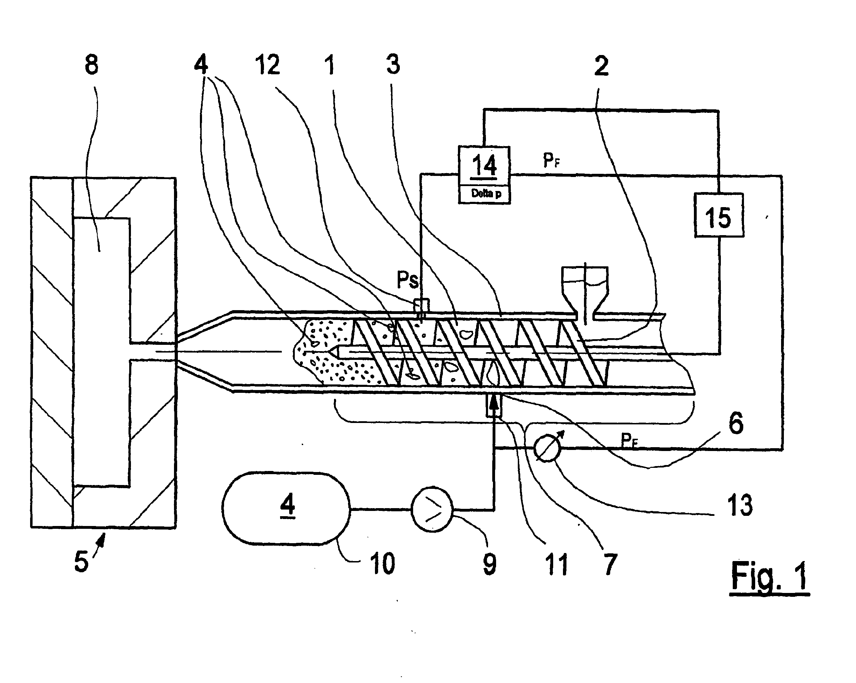

In Fig. 1 ist der Schnitt durch eine Spritzgießanordnung zu sehen. In einem Schneckenzylinder 3 ist eine Plastifizier- und Einspritzschnecke drehbeweglich und axial verschiebbar angeordnet. Zwecks Herstellung von thermoplastischer Kunststoffschmelze 1 rotiert die Schnecke 2 zunächst ohne Axialbewegung im Schneckenzylinder 3.

Gas 4 ist in einem Vorratsbehälter 10 gespeichert. Es wird einem Verdichter 9 zugeführt, der es auf einen gewünschten Druck bringt. Vom Verdichter 9 aus gelangt das Gas über eine Leitung zu einer Einspritzdüse 11, die am Schneckenzylinder 3 angebracht ist. Nicht dargestellt ist eine Volumenkontrollvorrichtung, mit der das Volumen des eingespritzten Gases geregelt werden kann. Durch die Düse 11 kann das Gas 4 gesteuert in den Schneckenzylinder 3 und damit in die Kunststoffschmelze 1 eingespritzt werden. Dies gelingt freilich nur dann, wenn der Gasdruck $p_F$ größer ist als der Druck in der Schmelze $p_S$, d. h. die Druckdifferenz

$$\text{Delta } p = p_F - p_S$$

muß positiv sein.

Wichtig ist, daß die Eingasung des Gases über die Düse 11 an einer axialen Position 6 erfolgt, an der sich zumindest zeitweise - namentlich während der Plastifizierung von Schmelze - die Schneckengänge 7 der Schnecke 2 befinden.

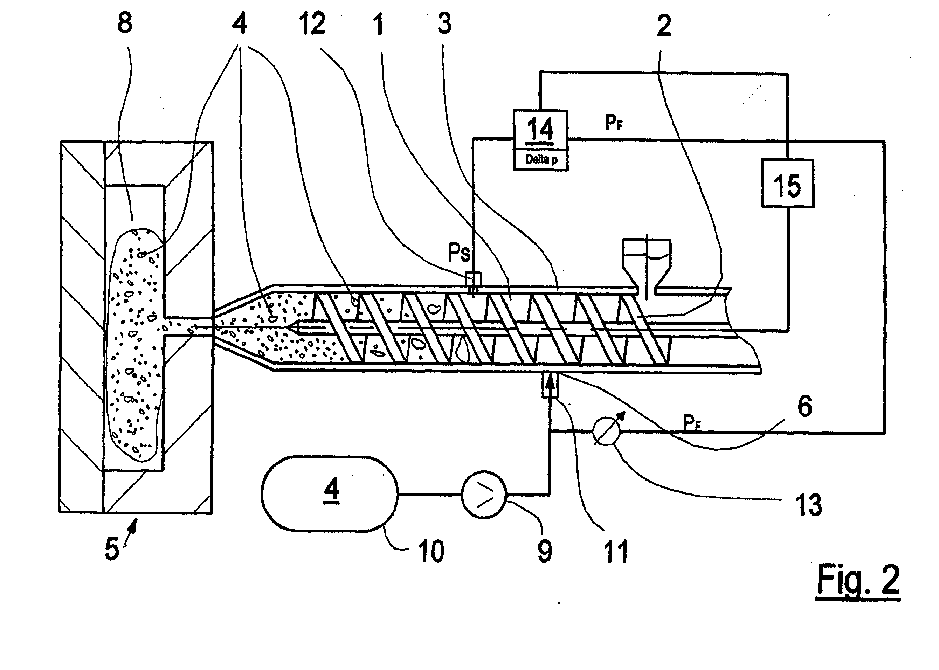

Wenn genügend Schmelze-Gas-Gemisch für einen Schuß produziert ist, kann das Gemisch in die Kavität 8 des Spritzgießwerkzeugs 5 eingespritzt werden, wie dies in Fig. 2 zu sehen ist. Dabei kann es - muß es aber nicht - zu einer weiteren Zugabe von Gas 4 über die Düse 11 in den Schneckenzylinder 3 kommen.

Zur Schaffung eines stabilen Spritzgießprozesses wird dafür Sorge getragen, daß die Druckdifferenz Delta p weitgehend konstant bleibt, zumindest in einem vorgegebenen Toleranzbereich, der z. B. 2 bar betragen kann.

Die Vorrichtung ist dafür mit einem Drucksensor 12 zur Messung des Drucks $p_S$ in der Schmelze 1, mit einem Manometer 13 zur Messung des Gasdrucks $p_F$ sowie mit einem Differenzbilder 14 zur Bestimmung der Druckdifferenz Delta p = $p_F$ - $p_S$ ausgestattet. Die gemessene Druckdifferenz wird der Steuerung 15 der Spritzgießmaschine zugeleitet, die gemäß einem Programm dafür Sorge tragen kann, daß dieser Wert innerhalb eines vorgegebenen Toleranzbandes bleibt. Als Eingriffsmöglichkeiten dienen diejenigen Spritzgießparameter, die dem Fachmann dafür geläufig sind, z. B. die Drehzahl der Schnecke und die axiale Kraft beim Einspritzen von Schmelze. Es ist evident, daß eine Reduzierung der Einspritzkraft den Schmelzedruck reduziert, worüber eine Eingriffsmöglichkeit besteht. Andererseits kann auch der Gasdruck $p_F$ entsprechend geregelt werden, um die gewünschte Druckdifferenz Delta p einzuhalten.

Statt eines Gases kann ebenso natürlich auch ein anderes Fluid, also eine Flüssigkeit der Schmelze zugegeben werden.

Durch die Fluidzugabe wird erreicht, daß ein Formteil aus einem Kunststoff-Gas-Gemisch hergestellt wird, daß keine Einfallstellen aufweist. Damit können insbesondere große, geschäumte Kunststoffplatten prozeßsicher und preiswert hergestellt werden.

Weiterhin können auf einfache Weise bestehende Spritzgießmaschinen für das Verfahren umgerüstet werden.

Um ein vorzeitiges Aufschäumen der Kunststoff-Gas- oder Kunststoff-Flüssigkeits-Mischung in der Kavität zu verhindern, kann vor der Injektion der Mischung in der Kavität ein Gegendruck aufgebaut werden, der erst allmählich mit dem Eintritt der Mischung abgebaut wird; der Schmelzefließfront wird somit ein Gaspolster entgegengesetzt. Das Aufschäumen kann darüber gesteuert bzw. geregelt werden.

**Bezugszeichenliste:**

1 thermoplastische Kunststoffschmelze

2 Plastifizier- und Einspritzschnecke

3 Schneckenzylinder

4 Fluid

5 Spritzgießwerkzeug

6 axiale Einspritzposition in den Schneckenzylinder 3

7 Schneckengänge der Plastifizier- und Einspritzschnecke 2

8 Kavität des Spritzgießwerkzeugs

9 Verdichter

10 Vorratsbehälter

11 Einspritzdüse

12 Mittel zur Messung des Drucks $p_s$ in der Schmelze

13 Mittel zur Messung des Drucks $p_F$ des Fluids

14 Mittel zur Bestimmung der Druckdifferenz Delta p = $p_F$ - $p_s$

15 Steuerungsmittel der Spritzgießmaschine

$p_s$ Druck in der thermoplastischen Schmelze 1

$p_F$ Druck des Fluids 4

Delta p Druckdifferenz = $p_F$ - $p_s$

**Patentansprüche**

1. Verfahren zum Spritzgießen von Kunststoff-Formteilen aus thermoplastischem Kunststoff, das die Schritte aufweist:

a) Herstellen von thermoplastischer Kunststoffschmelze (1) durch Rotation einer Plastifizier- und Einspritzschnecke (2) in einem Schneckenzylinder (3);
b) Versetzen der thermoplastischen Kunststoffschmelze (1) mit einem Fluid (4) durch Eingabe des Fluids (4) in den Schneckenzylinder (3);
c) Durchmischen der mit Fluid (4) versetzten thermoplastischen Kunststoffschmelze (1) durch Ausführung einer Rotationsbewegung der Plastifizier- und Einspritzschnecke (2);
d) Einspritzen des Gemisches aus thermoplastischer Kunststoffschmelze (1) und Fluid (4) in die Kavität (8) eines Spritzgießwerkzeugs (5);

wobei das Einspritzen des Gemisches aus thermoplastischer Kunststoffschmelze (1) und Fluid (4) in die Kavität (8) eines Spritzgießwerkzeugs (5) durch translatorische Verschiebung der Plastifizier- und Einspritzschnecke (2) erfolgt,
wobei das Fluid (4) an einer axialen Position (6) in den Schneckenzylinder (3) eingeleitet wird, an der sich zumindest zeitweise die Schneckengänge (7) der Plastifizier- und Einspritzschnecke (2) befinden,
wobei während der Eingabe des Fluids (4) in den Schneckenzylinder (3) gemäß Schritt b) die Druckdifferenz (Delta p) zwischen dem Druck ($p_F$) des Fluids (4) und dem Druck ($p_s$) in der thermoplastischen Kunststoffschmelze (1) in geregelter Weise weitgehend konstant gehalten wird,
wobei das Spritzgießwerkzeug (5) ein verschiebbares Element zur Veränderung des Volumens der Kavität (8) des Spritzgießwerkzeugs (5) aufweist (atmendes Werkzeug) und
wobei mit einem für einen Prägevorgang geeigneten Spritzgießwerkzeug (5) (Prägewerkzeug) der Einspritzvorgang bei einem Kavitätsanfangsvolumen des Spritzgießwerkzeuges beginnt, das Kavitätsvolumen des Spritzgießwerkzeugs dann während des Einspritzens erhöht wird und gegen Ende des Einspritzens das Kavitätsvolumen des Spritzgießwerkzeugs durch Ausführung eines Prägevorgangs wieder verringert wird.

2. Verfahren nach ein Anspruch 1, **dadurch gekennzeichnet, dass** der Druck (pS) in der thermoplastischen Kunststoffschmelze (1) zumindest während der Eingabe von Fluid (4) auf einem niedrigen Niveau gehalten wird.

3. Verfahren nach einem der Ansprüche 1 oder 2, **dadurch gekennzeichnet, dass** auch während des Einspritzens des Gemisches aus thermoplastischer Kunststoffschmelze (1) und Fluid (4) in die Kavität (8) des Spritzgießwerkzeugs (5) gemäß Schritt d) von Anspruch 1 weiter Fluid (4) zugeführt wird.

4. Verfahren nach einem der Ansprüche 1 bis 3, **da-**

**durch gekennzeichnet, dass** als Plastifizier- und Einspritzschnecke (2) eine Mehrzonenschnecke eingesetzt wird, in deren Bereich der Schneckengänge (7) das Fluid (4) eingegeben wird.

5. Verfahren nach Anspruch 4, **dadurch gekennzeichnet, dass** die Mehrzonenschnecke eine Sechszonenschnecke ist, die eine Einzugszone, eine Kompressionszone, eine Meteringzone, eine Dekompressionszone, eine weitere Kompressionszone und eine Ausstoßzone aufweist.

6. Verfahren nach einem der Ansprüche 1 bis 5, **dadurch gekennzeichnet, dass** zumindest zeitweise während des Einspritzens des Gemisches aus thermoplastischer Kunststoffschmelze (1) und Fluid (4) in die Kavität (8) des Spritzgießwerkzeugs (5) gemäß Schritt d) von Anspruch 1 in der Kavität (8) ein Gegendruck aufgebaut und aufrechterhalten wird.

7. Verfahren nach Anspruch 6, **dadurch gekennzeichnet, dass** der Gegendruck nach einem vorgebbaren zeitlichen Profil gesteuert oder geregelt wird.

**Claims**

1. Process for injection moulding of plastic mouldings made from thermoplastic plastic, which has the steps:

   a) production of thermoplastic plastic melt (1) by rotation of a plastifying and injection worm (2) in a worm cylinder (3);
   b) treating the thermoplastic plastic melt (1) with a fluid (4) by adding the fluid (4) to the worm cylinder (3);
   c) mixing the thermoplastic plastic melt (1) treated with fluid (4) by executing a rotary movement of the plastifying and injection worm (2);
   d) injecting the mixture of thermoplastic plastic melt (1) and fluid (4) into the cavity (8) of an injection-moulding die (5);

   wherein injection of the mixture of thermoplastic plastic melt (1) and fluid (4) into the cavity (8) of an injection-moulding die (5) takes place by translational displacement of the plastifying and injection worm (2),
   wherein the fluid (4) is introduced into the worm cylinder (3) at an axial position (6), at which at least for some of the time the spirals (7) of the plastifying and injection worm (2) are situated,
   wherein during the addition of fluid (4) to the worm cylinder (3) according to step c), the pressure difference (Delta p) between the pressure ($p_F$) of the fluid (4) and the pressure ($p_s$) in the thermoplastic plastic melt (1) is largely kept constant in a controlled manner,
wherein the injection-moulding die (5) has a displaceable element for changing the volume of the cavity (8) of the injection-moulding die (5) (breathing die) and
wherein with an injection-molding die (5) which is suitable to execute an embossing process (embossing die) the injection process starts at a cavity initial volume of the injection-moulding die, the cavity volume of the injection-moulding die is then increased during injection and towards the end of injection, the cavity volume of the injection-moulding die is reduced again by executing an embossing process.

2. Process according to claim 1, **characterized in that** the pressure ($p_s$) in the thermoplastic plastic melt (1) is kept at a low level at least during the addition of fluid (4).

3. Process according to one of claims 1 or 2, **characterized in that** even during the injection of the mixture of thermoplastic plastic melt (1) and fluid (4) into the cavity (8) of the injection-moulding die (5) according to step d) of claim 1, fluid (4) continues to be supplied.

4. Process according to one of claims 1 to 3, **characterized in that** a multi-zone worm, in the region of the spirals (7) of which the fluid (4) is added, is used as plastifying and injection worm (2).

5. Process according to claim 4, **characterized in that** the multi-zone worm is a six-zone worm, which has an intake zone, a compression zone, a metering zone, a decompression zone, a further compression zone and a discharge zone.

6. Process according to one of claims 1 to 5, **characterized in that** at least some of the time during injection of the mixture of thermoplastic plastic melt (1) and fluid (4) into the cavity (8) of the injection-moulding die (5) according to step d) of claim 1, a counter-pressure is built up and maintained in the cavity (8).

7. Process according to claim 6, **characterized in that** the counter-pressure is controlled or regulated according to a presettable temporal profile.

**Revendications**

1. Procédé de moulage par injection de pièces en matière synthétique thermoplastique, qui présente les étapes suivantes:

   a) élaboration d'une matière synthétique thermoplastique fondue (1) par rotation d'une vis de plastification et d'injection (2) dans un cylindre à vis (3),

b) mélange d'une matière synthetique thermoplastique fondue (1) avec un fluide (4) par introduction du fluide (4) dans le cylindre à vis (3),

c) brassage d'une matière synthétique thermoplastique fondue (1) mélangée avec le fluide (4) par exécution d'un mouvement de rotation de la vis de plastification et d'injection (2),

d) injection du mélange d'une matière synthétique thermoplastique fondue (1) et de fluide (4) dans la cavité (8) d'un moule d'injection (5),

dans lequel l'injection du mélange d'une matière synthétique thermoplastique fondue (1) et de fluide (4) dans la cavité (8) d'un moule d'injection (5) est effectuée par translation de la vis de plastification et d'injection (2),

dans lequel le fluide (4) est introduit dans le cylindre à vis (3) à un endroit axial (6) où se trouve au moins par moments le filet (7) de la vis de plastification et d'injection (2),

dans lequel pendant l'introduction du fluide (4) dans le cylindre à vis (3) selon l'étape c), la différence (delta p) entre la pression ($p_F$) du fluide (4) et la pression ($p_s$) dans la matière synthétique thermoplastique fondue (1) est maintenue dans une large mesure constante de manière réglée,

dans lequel le moule d'injection (5) présente un élément mobile pour la modification du volume de la cavité (8) de ce moule (5) (moule respirant) et

dans lequel avec un moule d'injection (5) qui est convient pour exécuter une opération de marquage (outil à marquer) l'opération d'injection commence avec un volume initial de la cavité du moule d'injection, le volume de la cavité du moule d'injection est ensuite augmenté pendant l'injection, et vers la fin de l'injection, le volume de la cavité du moule d'injection est réduit par exécution d'une opération de marquage.

2. Procédé selon revendication 1, **caractérisé par le fait que** la pression ($p_s$) dans la matière synthétique thermoplastique fondue (1) est maintenue à un bas niveau au moins pendant l'introduction de fluide (4).

3. Procédé selon l'une des revendications 1 ou 2, **caractérisé par le fait que** du fluide (4) continue d'étre apporté pendant l'injection du mélange d'une matière synthétique thermoplastique fondue (1) et de fluide (4) dans la cavité (8) du moule d'injection (5) selon l'étape d) de la revendication 1.

4. Procédé selon l'une des revendications 1 à 3, **caractérisé par le fait que** comme vis de plastification et d'injection (2) est employée une vis à plusieurs zones dans la zone du filet (7) de laquelle est introduit le fluide (4).

5. Procédé selon la revendication 4, **caractérisé par le fait que** la vis à plusieurs zones est une vis à six zones qui présente une zone d'entrée, une zone de compression, une zone de dosage, une zone de décompression, une autre zone de compression et une zone d'expulsion.

6. Procédé selon l'une des revendications 1 à 5, **caractérisé par le fait qu'**au moins par moments pendant l'injection du mélange d'une matière synthétique thermoplastique fondue (1) et de fluide (4) dans la cavité (8) du moule d'injection (5) selon l'étape d) de la revendication 1, dans la cavité (8) est établie et maintenue une contre-pression.

7. Procédé selon la revendication 6, **caractérisé par le fait que** la contre-pression est commandée ou régulée selon un profil temporel pouvant être fixé.

Fig. 1

EP 0 995 569 B2

Fig. 2

**EP 0 995 569 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3734164 A1
- DE 1964748
- EP 0799853 A1
- DE 3020122 C2
- US 4211523 A